# EUROPEAN PATENT APPLICATION

(11) **EP 2 662 420 A1**
(43) Date of publication of application: **13.11.2013**
(21) Application number: 12382167.0
(22) Date of filing: 07.05.2012
(51) Int. Cl.: C09C 1/40, C08K 3/00

(54) **Silica-surface modified alpha-alumina whiskers and uses thereof**

(71) Applicant: Neoker, S.L, 15895 Milladoiro - Ames (A Coruna) (ES)
(72) Inventor: Cerecedo Fernández, Carmen, 15895 Milladoiro-Ames (A Coruña) (ES); Valcárcel Juárez, Victor, 15895 Milladoiro-Ames (A Coruña) (ES); Guitián Rivera, Francisco, 15895 Milladoiro-Ames (A Coruña) (ES)
(74) Representative: ABG Patentes, S.L.

(57) **Abstract**

The present invention relates to silica-surface modified α-Al₂O₃ whiskers and the method for preparing them. The α-Al₂O₃ whiskers are prepared previously by vapor-liquid-solid deposition (VLS). The invention also relates the use of said whiskers as reinforcing fiber material for the preparation of composites having the resulting composites superior flexural properties and thermal stability. The invention further related to a shaped article comprising said composites as defined above, as well as the use of them for application comprising construction, aeronautic, automotive, defense, optical, food or medical sectors.

## Description

### FIELD OF THE INVENTION

The present invention relates to the field of fillers for composite materials, and in particular to modified α-Al₂O₃ whiskers, a method for preparing them and uses thereof.

### BACKGROUND

The use of fillers is of increased interest in the formation of composites since small fractions of fillers (0.5 to 30 wt%) are enough to impart the composites with superior mechanical, thermal, electric or optical properties. It is agreed that the aspect ratio (surface to volume ratio) of the constituents plays a key role to such improvements.

Among fillers, alumina has received special attention for polymer, metal and ceramic composites (PMC, MMC and CMC's respectively) with different areas of applications such as construction, aerospace, power utility, automotive, and military sectors, due to their lightweight, high strength and thermal resistance even at very high temperatures. Alumina fillers can advantageously compete with non-oxide fillers (for example SiC), which lose their properties through oxidation or reaction with the matrixes at high temperatures.

Although alumina particles and fibers are both used as fillers in composites, fiber-reinforced composites offer outstanding mechanical properties when compared to those with particulate reinforcements that have more isotropic properties. For example, polymer composites containing alumina fibers with extremely high properties have been described (Noordin et al. (2010). Ashok Kumar (Ed.), ISBN: 978-953-7619-86-2, InTech). However, tendency for the fibers to cluster together and therefore deteriorating the bulk properties of the composites have been observed. This is especially frequent in the case of polymer composites. Similar to other inorganic particles, alumina is difficult to disperse in polymer matrices since its compatibility with polymeric materials is poor. As a consequence, the fibers tend to cluster together deteriorating the properties of the corresponding composites. The same effect on bulk properties has been observed due to poor interaction between the fibers and the polymer matrix (Sun et al.; Composites Sci. Techn. 2009, 69, 2392).

The efficiency of a fiber-reinforced composite depends on the matrix interface and the ability to transfer stress from the matrix to the fiber. In other words, the response of a material to an applied stress is strongly dependent on the nature of the bonds. Poor linkage between the fiber and the matrix such as in composites introduce artificial defects, which consequently result in a deleterious effect on the mechanical and thermal properties of the composites. The interfacial interaction between the fiber and the matrix plays therefore a crucial role in determining the quality and properties of the composites.

Attempts to improve the compatibility and the interaction between the alumina filler and the matrix involve surface functionalization of the alumina particles. Chemically functionalized alumina particles with organic-inorganic hybrid acids (US2007/0049659 A1) or carboxylate-alumoxanes (Shahid et al.; Compos. Sci. Techn. 2005, 65, 2250-2258) in resin composites have been described. It was however observed that, although the functionalized alumina is more miscible within the matrix, a marked decrease in performance due to an increase in brittleness also appeared. This was proposed to be due to weak interaction between resin and the alumina fiber. Guo et al. (J. Mater. Chem. 2006, 16, 2800-2808) described the surface functionalization of alumina particles with a trimethoxysilane derivate (MPS) as coupling agent. The resulting polymer composite using the treated particles showed a strong particle/matrix interfacial bonding with a significant increase in the modulus and strength, but no effect was observed on the thermal properties.

In view of the above, there is a need to obtain surface treated alumina fibers as reinforcing material for composites with good compatibility and strong interaction at the matrix-fiber interface, in order to produce composites with both superior mechanical and thermal properties.

α-Al₂O₃ whiskers are in particular good candidates for use as fillers in metal composites (Corrochano et al.; Mater. Lett. 2008, 62, 103) and have the advantage of the absence of grain growth that appears at high temperatures in polycrystalline fibers. α-Al₂O₃ whiskers are defect-free, very thin fibers, which are in fact the most resistant materials known, even at high temperatures. Alumina fibers are usually produced using hydrothermal treatment (Ma et al.; Mater. Lett. 2009, 63, 881) and sol-gel techniques (Teoh et al.; J. Sol-Gel Sci. Technol. 2007, 44(3), 177) of various alumina precursors. These alumina fibers, which consist of fibrous boehmite, may be calcined to obtain the α-alumina fibers. The vapor-liquid-solid deposition method (VLS), consisting on burning aluminum together with silica particles at high temperature (Cerecedo-Fernández *et al*.; EP1975125 A1), allows obtaining pure monocristalline alumina fibers (alumina whiskers). However, the surface fuctionalization of α-Al₂O₃ whiskers and their use as reinforcement material in composites has not been described.

### BRIEF DESCRIPTION OF THE INVENTION

The authors of the present invention have found that the use of silica-surface modified α-Al₂O₃ whiskers as fillers provides polymer, metal and ceramic composites with improved mechanical and thermal properties.

The advantage conferred by the incorporation of the silica-surface modified α-Al₂O₃ whiskers into the matrices mainly arises as a consequence of the enhanced interaction between alumina surfaces and the matrix. This is particularly relevant in the case of polymer matrices due to the fact that alumina is difficult to disperse within polymer matrices since its compatibility with polymeric materials is poor.

Alumina whiskers are also superior to alumina polycrystalline fibers since they do not exhibit grain growth, not even at high temperature (>1000°C). This is an advantage over the existing fibrous fillers, since grain growth induces a subsequent decrease in the mechanical properties. Grain growth at high temperatures is usually restricted in polycrystalline fibers by the incorporation of additives, resulting in decreased grain growth and improved resistance. In the case of using alumina whiskers, additives are not necessary.

Therefore, a first aspect of the invention refers to a silica-surface modified α-Al₂O₃ whisker.

Another aspect of the invention also relates to a method for the preparation of silica-surface modified α-Al₂O₃ whiskers, comprising:
- adding α-Al₂O₃ whiskers in an aqueous phase colloidal solution of silica particles to form a colloidal suspension of silica-surface modified α-Al₂O₃ whisker;
- precipitating the resulting colloidal suspension;
- subjecting the precipitated silica-surface modified α-Al₂O₃ whisker to a heating process.

Finally, another aspect of the present invention relates to a composite material comprising silica-surface modified α-Al₂O₃ whiskers as defined above.

An additional aspect of the invention refers to a shaped article comprising a composite material as defined above.

Finally, another aspect of the invention relates to the use of the composite material as defined above for the preparation of components in construction, aeronautic, automotive, optical, food or medical sectors.

### BRIEF DESCRIPTION OF THE DRAWINGS

Figure 1 shows EDX analysis for the α-alumina whiskers before the purification treatment corresponding to the SEM analyses.
Figure 2 shows SEM micrographs of silica-surface treated α-alumina whiskers.
Figure 3 shows EDX analysis for the silica-surface treated α-alumina whiskers corresponding to the SEM analyses.
Figure 4 shows SEM micrographs of a composite with HDPE content of 90 wt% and silica-surface treated α-Al₂O₃ whiskers content of 10 wt%.
Figure 5 shows SEM micrographs of a composite with PA12 content of 90 wt% and silica-surface treated α-Al₂O₃ whiskers content of 10 wt%.

### DETAILED DESCRIPTION OF THE INVENTION

The present invention relates to silica-surface modified α-Al₂O₃ whiskers.

By the term "silica-surface modified α-Al₂O₃ whiskers" it is understood α-Al₂O₃ whiskers whose surface has been functionalized with silica particles.

The term "α-Al₂O₃ whiskers" refers to single-crystal aluminum oxide fibers with preferential growth in the direction of the c-axis orientation of the hexagonal system present for the alpha-alumina phase (corundum).

In a particular embodiment, the surface of the α-Al₂O₃ whiskers is functionalized so as silanol groups are left incorporated thereon.

More preferably, said silica-surface modified α-Al₂O₃ whiskers comprise on its surface a silanol composition ranging from 5 to 40 wt% based on the total weight of the modified α-Al₂O₃ whisker.

In a particular embodiment of the invention, the α-Al₂O₃ whiskers have an aspect ratio higher than 5, more preferably between 10 and 80, more preferably between 25 and 50.

By the term "aspect ratio" it is understood the ratio between the length of the fiber and its diameter. Preferably, the diameter of the fiber is ranging between 0.01 and 10 µm.

In another particular embodiment, α-Al₂O₃ whiskers have a tensile strength higher than 6 GPa, more preferably between 10 and 25 GPa.

The α-Al₂O₃ whiskers can be prepared by a vapor-liquid-solid deposition method (VLS) with a fiber ending drop mechanism under inert atmospheres and the addition of selected transition metals that improves the amount of produced α-Al₂O₃ fibers. A method for the preparation of α-Al₂O₃ fibers by VLS is particularly described in Spanish patent ES2182684.

In the context of the present invention, the term "vapor-liquid-solid deposition method (VLS)" stands for Vapor (V) feed gases, Liquid catalyst (L), and Solid crystalline (S) whisker growth. α-Al₂O₃ whiskers are readily produced by this method and grow into a white, cotton-like mass of crystals around the aluminum piece. Each fiber has a hexagonal section, drops at one of its ends, and one basal hexagonal pyramid. The drops at the ends of the fibers demonstrate that the fibers had grown via VLS deposition.

In a particular embodiment, the α-Al₂O₃ whiskers have purity higher than 99.9%, more preferably higher than 99.97%. The purification of α-Al₂O₃ whiskers previously obtained by the VLS method described above can be carried out by volatilization of the impurities in the solid phase using vacuum at oxygen partial pressure lower than 10⁻¹ atm and temperatures ranging from 1400 and 2000°C.

Another aspect of the present invention relates to a method for preparing silica-surface modified α-Al₂O₃ whiskers as defined above.

Said method comprises first adding the alumina whiskers in an aqueous phase colloidal solution of silica particles to form a colloidal suspension of silica-surface modified α-Al₂O₃ whiskers.

The aqueous phase colloidal solution of silica particles is generally known as silisol.

Preferably, the content of the silica particles in the aqueous solution ranges from 10 to 70 wt% with respect to the total weight of the aqueous solution.

As a result of this step, the reacting group present on the surface of the α-Al₂O₃ whiskers, such as hydroxyl groups, and the adsorbed moisture react with the silica dispersed in the colloidal solution so as silanol groups are left incorporated on the surface of said whiskers.

Thus, this step leads to the formation of a colloidal suspension wherein α-Al₂O₃ whiskers modified with silanol groups are dispersed.

The resulting colloidal suspension is then subjected to a precipitation step. In a particular embodiment, said precipitation is performed by stirring and sedimentation at room temperature.

The precipitated α-Al₂O₃ whiskers modified with silanol groups are then subjected to a heating step.

In a particular embodiment, said heating step is performed between 70 and 150°C. At this temperature range, water desorbs and removed from the surface of the modified whiskers. More preferably said step is performed at 80°C during about 12 hours.

In said particular embodiment, dried α-Al₂O₃ whiskers modified with silanol groups on their surface are obtained. Preferably, said silica-surface modified α-Al₂O₃ whiskers comprise on its surface a silanol composition ranging from 5 to 40 wt% based on the total weight of the modified α-Al₂O₃ whisker.

In another particular embodiment, the heating process is performed at temperatures higher than about 200°C, so as dehydration of the silanol groups starts to occur and bonds Si-O-Si are formed.

Another aspect of the present invention relates to silica-surface modified α-Al₂O₃ whiskers obtainable by a method as defined above.

The silica-surface modified α-Al₂O₃ whiskers can be used as fillers or reinforcement agents for the preparation of polymer, metal and ceramic composites.

Therefore, another aspect of the present invention refers to a composite material comprising silica-surface modified α-Al₂O₃ whiskers as defined above as fillers.

In a preferred embodiment, the silica-surface modified α-Al₂O₃ whiskers are used as fillers or reinforcement agents for the preparation of polymer, metal and ceramic composites.

The term "composites" encompasses polymer, metallic and ceramic composites.

Due to the high aspect ratio, small fractions of silica-surface treated α-Al₂O₃ whiskers are enough to impart polymer, metallic and ceramic composites with improved mechanical and thermal properties.

Thus, in another particular embodiment, the silica-surface modified α-Al₂O₃ whiskers are present in a proportion ranging from 5 to 30 wt% with respect to the total weight of the composite material, more preferably from 8 to 20 wt%, even more preferably in a proportion of about 10 wt%.

In a particular embodiment, the composite material is a polymer composite material which comprises at least one polymer matrix and silica-surface modified α-Al₂O₃ whiskers as reinforcing fillers.

In this particular embodiment, the surface of the α-Al₂O₃ whiskers is preferably modified with silanol groups. The presence of hydroxyl groups from silanol on the whisker surface enhance interactions occurring across fiber-matrix interfaces by forming hydrogen bonding. In addition, the high aspect ratio of the α-Al₂O₃ whiskers (length-to-diameter ratio) is proportional to the reinforcement effect on the polymer matrix.

The term 'polymer composite' refers to a composite that is a fiber-filled polymer. In a preferred embodiment, said term encompasses a polymer nanocomposite, understanding as such a composite that is a fiber-filled polymer for which at least one dimension of the dispersed fiber is in the nanometer range.

Thermoplastics, thermosets and elastomers of any type can be used to prepare said polymer composites according to the invention. However, in a particular embodiment, it is preferred the use of thermoplastic polymers.

Thermoplastic polymers are well known in the art and encompass those polymers, also known as thermosoftening polymers, which become soft and formable when heated and rigid when cooled significantly below their softening point. They are made up of long, unlinked polymer chains, generally with a high molecular weight. Because the molecular chains are unlinked, they rely on other interactions, such as dipole-dipole interactions, aromatic ring stacking, hydrogen bonds or Van der Waals forces.

In a particular embodiment of the invention, the thermoplastic polymer is selected from acrylonitrile-butadiene-styrene copolymer (ABS), (meth)acrylic polymes, cellulose acetate, cyclic olefin copolymer (COC), ethylene-vinyl acetate (EVA), ethylene vinyl alcohol (EVOH), fluoroplastics (PTFE, alongside with FEP, PFA, CTFE, ECTFE, ETFE), Kydex (a trademarked acrylic/PVC alloy), liquid crystal polymer (LCP), polyoxymethylene (POM or Acetal), polyacrylates, polyacrylonitrile (PAN or Acrylonitrile), polyamide (PA or Nylon), pPolyamide-imide (PAI), polyaryletherketone (PAEK or Ketone), polybutadiene (PBD), polybutylene (PB), polybutylene terephthalate (PBT), polycaprolactone (PCL), polychlorotrifluoroethylene (PCTFE), polyethylene terephthalate (PET), polycyclohexylene dimethylene terephthalate (PCT), polycarbonate (PC), polyhydroxyalkanoates (PHAs), polyketone (PK), polyester, polyethylene (PE), polyetheretherketone (PEEK), polyetherketoneketone (PEKK), polyetherimide (PEI), polyethersulfone (PES), chlorinated polyethylene (CPE), polyimide (PI), polylactic acid (PLA), polymethylpentene (PMP), polyphenylene oxide (PPO), polyphenylene sulfide (PPS), polyphthalamide (PPA), polypropylene (PP), polystyrene (PS), polysulfone (PSU), polytrimethylene terephthalate (PTT), polyurethane (PU), polyvinyl acetate (PVA), polyvinyl chloride (PVC), polyvinylidene chloride (PVDC) and styrene-acrylonitrile (SAN).

Preferably, the thermoplastic polymer is selected from polyamide (PA), polyethylene (PE), polycarbonate (PC), polypropylene (PP) and acrylonitrile-butadiene-styrene copolymer (ABS). More preferably, the thermoplastic polymer is a polyamide or polyethylene, even more preferably are the polyamides known as PA66 and PA6 or mixtures thereof and mixtures of polycarbonate and acrylonitrile-butadiene-styrene copolymer.

In a preferred embodiment, the polymer composite comprises polyethylene as polymer matrix and silica-surface modified α-Al₂O₃ whiskers as reinforcing fillers.

In another preferred embodiment, the polymer composite comprises a polyamide as the polymer matrix and silica-surface modified α-Al₂O₃ whiskers as reinforcing fillers.

In another preferred embodiment, the polymer composite comprises a polymer blend selected from PC/ABS and PA66/PA6 and silica-surface modified α-Al₂O₃ whiskers as reinforcing fillers.

In another particular embodiment, the composite material is a metal composite material which comprises at least one metallic matrix and silica-surface modified α-Al₂O₃ whiskers as reinforcing fillers.

The term 'metal composite' refers to a composite that is a fiber-filled metal. In a preferred embodiment, said term encompasses a metal nanocomposite, understanding as such a composite that is a fiber-filled metal material for which at least one dimension of the dispersed fiber is in the nanometer range.

Metallic materials than can be used to prepare said metal composites according to the invention are pure metal selected from aluminum, magnesium, titanium, chromium, iron, nickel and copper, or alloys thereof.

The term 'alloys' refers to a mixture or metallic solid solution composed of two or more elements.

In another preferred embodiment, the alloy is inconel, referred as an alloy of nickel/chromium.

In another particular embodiment, the composite material is a ceramic composite material which comprises at least one ceramic matrix and silica-surface modified α-α-Al₂O₃ whiskers as reinforcing fillers.

The term 'ceramic composite' refers to a composite that is a fiber-filled ceramic material. In a preferred embodiment, said term encompasses a ceramic nanocomposite, understanding as such a composite that is a fiber-filled ceramic material for which at least one dimension of the dispersed fiber is in the nanometer range.

Ceramic materials than can be used to prepare said ceramic composites according to the invention are pure one-single component ceramic material selected from alumina, silica, magnesia and mullite, or a composite ceramic material comprising at least one of the single-component ceramic materials.

In a particular embodiment, the composite material of the present invention has improved mechanical properties and improved thermal stability when compared to the pure matrix.

In another aspect, the invention refers to a shaped article comprising a composite material as defined above.

Finally, another aspect of the invention refers to the use of a composite material as defined above, for the preparation of components in construction, aeronautic, automotive, optical, food or medical sectors.

### Examples

### Example 1. Preparation of silica-surface modified α-Al₂O₃ whiskers.

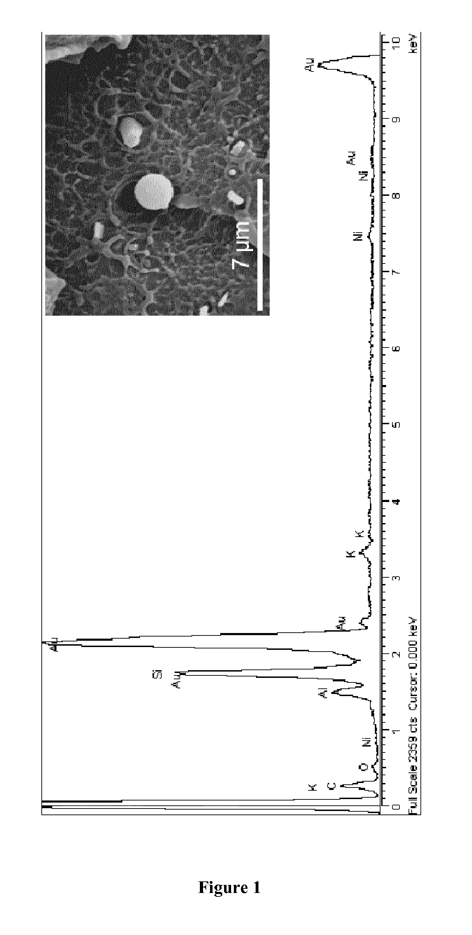

α-Al₂O₃ whiskers were previously synthesized according to the patent application ES2182684 (see Figure 1) and further purified by volatilization of the impurities in the solid phase using vacuum at oxygen partial pressure lower than 10⁻¹atm and temperatures ranging from 1400 and 2000°C (purity ≥ 99.97%). The resulting α-Al₂O₃ whiskers were surface treated with a solution of silisol in water (10-70% silica particle content). The fibers were dried in an oven at 80°C for 12 hours. The resulting treated whiskers have an aspect ratio ≥10, length ≥ 0.01 µm and tensile strength ≥ 6 GPa.

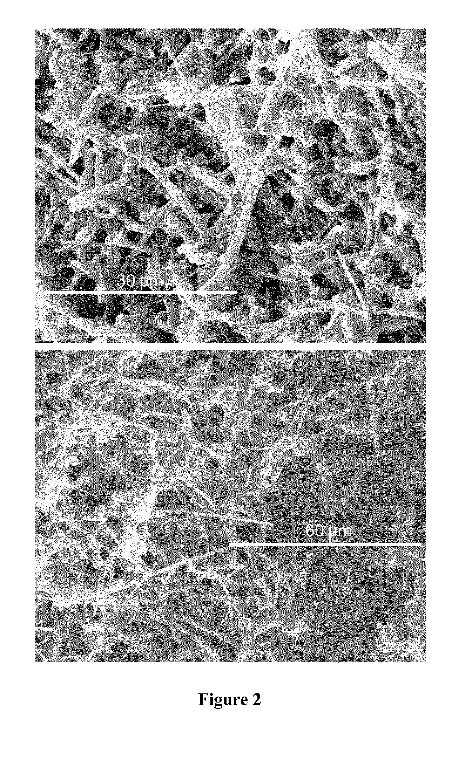

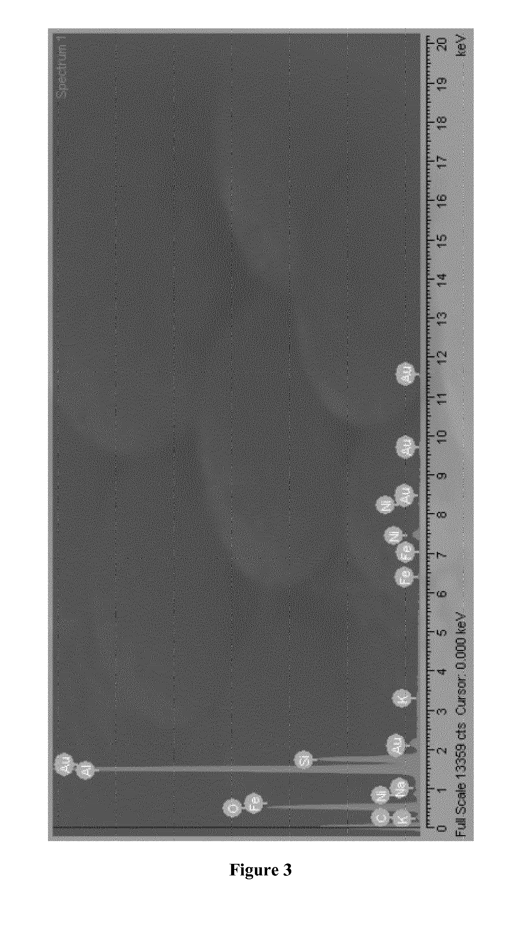

See Figure 1 for EDX analysis of α-Al₂O₃ whiskers before the purification treatment. See Figure 2 and Figure 3 for EDX and SEM analyses, respectively, of the prepared silica-surface modified α-Al₂O₃ whiskers.

### Example 2. Preparation of HDPE/silica-surface modified α-Al₂O₃ whisker composites.

For the polymer matrix, high-density polyethylene (HDPE) powder was used. The melt flow index (MFI) of the HDPE was experimentally determined to be 2.4 g/10min (ASTM D1238 - 175°C, 2.16 kg). α-Al₂O₃ whiskers used as fillers were previously synthesized according to example 1. The composite was then compounded powder mixing the polymer and the whiskers in an internal mixer at 160°C and a speed of 45 rpm during 3 minutes. The resulting composite composition was as follows:

| **Component** | **Composition (wt%)** |
|---|---|
| *HDPE* | 90 |
| *silica-surface modified* Al₂O₃ *whiskers* | 10 |

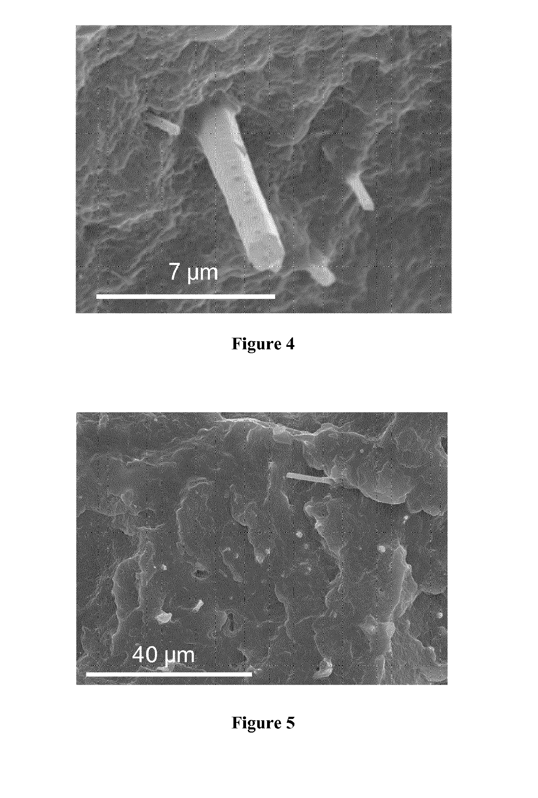

See Figure 4 for SEM micrographs of the prepared polymer composite.

### Example 3. Thermal stability of HDPE/silica-surface modified α-Al₂O₃ whisker composites.

The thermal stability of the composite prepared in the example 2 was measured using thermo gravimetric analysis (TGA) under argon with a heating rate for the dynamic conditions 10°C/min. The composite showed higher thermal-oxidative degradation temperature than that of the pure HDPE with an increment of 39°C (8.5%).

### Example 4. Flexural testing of HDPE/silica-surface modified α-Al₂O₃ whisker composites.

The mechanical properties of the composite prepared in the example 2 were measured from compression molded specimens. The specimens were compression molded into two plates (4mm width) at 170°C and 50 bars during 5 min. Flexural tests were then conducted in accordance with ISO 178 (5 mm/min deformation speed) for the prepared specimens. The flexural properties studied under three-point conditions were the flexural modulus and flexural strength. The composites exhibited higher flexural modulus and strength than the pure HDPE counterpart. The results are shown in the following table:

| **Flexural test** | **Percent increase (%)** |
|---|---|
| *Flexural modulus* | 64 |
| *Flexural strength* | 43 |

### Example 5. Preparation of PA12/silica-surface modified α-Al₂O₃ whisker composites.

For the polymer matrix, polyamide 12 (PA12) powder was used with a melting temperature around 185°C. α-Al₂O₃ whiskers used as fillers were previously synthesized according to example 1. The composite was then compounded powder mixing the polymer and the whiskers in an internal mixer at 200°C and a speed of 45 rpm during 3 minutes. The resulting composite composition was as follows:

| **Component** | **Composition (wt%)** |
|---|---|
| *PA12* | 90 |
| *silica-surface treated* α-*Al₂O₃ whiskers* | 10 |

See Figure 5 for a SEM micrograph of the prepared polymer composite.

### Example 6. Thermal stability of PA12/α-α-Al₂O₃ whisker composites.

The thermal stability of the composite prepared in the example 6 was measured using thermo gravimetric analysis (TGA) under argon with a heating rate for the dynamic conditions 10°C/min. The composite showed higher thermal-oxidative degradation temperature than that of the pure PA12 with an increment of 35°C (8.1%).

## Claims

1. A silica-surface modified α-Al₂O₃ whisker.

2. The silica-surface modified α-Al₂O₃ whisker according to claim 1, comprising silanol groups on the surface thereof.

3. The silica-surface modified α-Al₂O₃ whisker according to claim 2, comprising a silanol composition ranging from 5 to 40 wt% based on the total weight of the modified whisker.

4. The silica-surface treated α-Al₂O₃ whisker according to any of claims 1 to 3, wherein the α-Al₂O₃ whisker is obtainable by vapor-liquid-solid deposition (VLS).

5. A method for preparing a silica-surface modified α-Al₂O₃ whisker as defined in any of claims 1 to 4, comprising:
- adding α-Al₂O₃ whiskers in an aqueous phase colloidal solution of silica particles to form a colloidal suspension of silica-surface modified α-Al₂O₃ whiskers;
- precipitating the resulting colloidal suspension;
- subjecting the precipitated silica-surface modified α-Al₂O₃ whisker to a heating process.

6. The method according to claim 5, wherein the aqueous phase colloidal solution comprises from 10 to 70 wt% of silica particles.

7. The method according to any of claims 5 and 6, wherein the heating process is performed at a temperature ranging from 70 to 150°C.

8. A silica-surface treated α-Al₂O₃ whisker obtainable by a method according to any of claims 5 and 6.

9. A composite material comprising silica-surface modified α-Al₂O₃ whiskers as defined in any of claims 1 and 5 to 6.

10. The composite material according to claim 9, comprising at least one metallic matrix selected from pure metal and alloys thereof, and the silica-surface modified α--Al₂O₃ whiskers.

11. The composite material according to claim 10, wherein the pure metal is selected from aluminum, magnesium, titanium, chromium, iron, nickel and copper.

12. The composite material according to claim 9, comprising at least one ceramic matrix selected from alumina, silica, magnesia and mullite, and the silica-surface modified α-Al₂O₃ whiskers.

13. A shaped article comprising a composite material as defined in any of claims 9 to 12.

14. Use of a composite material as defined in any of claims 9 to 13 for the preparation of components in construction, aeronautic, automotive, defense, optical, food or medical sectors.
